# EUROPEAN PATENT SPECIFICATION

(11) **EP 2 071 806 B1**
(45) Date of publication and mention of the grant of the patent: **14.03.2012**
(21) Application number: 08748632.0
(22) Date of filing: 21.05.2008
(51) Int. Cl.: H04L 29/06

(54) **Receiving/transmitting agent method of session initiation protocol message and corresponding processor**
Empfangs-/Sendeagentverfahren für Sitzungseinleitungsprotokollnachricht und entsprechender Prozessor
Procédé avec agent de réception/émission de message de protocole de lancement de session et processeur correspondant

(30) Priority: 05.06.2007 CN 200710110460
(43) Date of publication of application: 17.06.2009
(73) Proprietor: Huawei Technologies Co., Ltd., Longgang District, Shenzhen Guangdong 518129 (CN)
(72) Inventor: BAO, Hongqing, Shenzhen, Guangdong 518129 (CN); SUN, Qian, Shenzhen, Guangdong 518129 (CN)
(74) Representative: Thun, Clemens
(86) International application number: PCT/CN2008/071026
(87) International publication number: WO 2008/148331

(56) References cited:
- WO-A-2007/036143
- WO-A-2007/126272
- WO-A1-02/061604
- CN-A- 1 455 544
- CN-A- 1 855 930
- CN-A- 1 968 268

## Description

This application claims a priority from the Chinese Patent Application No. 200710110460.X, filed with the Chinese Patent Office on June 5, 2007 and entitled "Method and Processor for Delegated Transmission/Reception of a Session Initiation Protocol, SIP, Message".

### Field of the Invention

The present invention relates to communication technologies, and in particular, to a method and processor for delegated transmission/reception of a Session Initiation Protocol, SIP, message.

### Background of the Invention

The Session Initiation Protocol, SIP, is an application layer control protocol for creating, modifying or terminating multimedia sessions. SIP network elements include a User Agent, UA, and a SIP server.

The UA is a logical entity that initiates or receives a call. A User Agent Client, UAC, initiates a request; a User Agent Server, UAS, receives a request. In the multiple transactions of one session, the roles of the UAC and UAS are interchangeable. For example, in a call between a user A and a user B, the user A initiates a call to the user B. In the transaction of call setup, the UA of the user A acts as the UAC and the UA of the user B acts as the UAS. When the call is ended, the user B disconnects first. In the transaction of call release, the UA of the user B is the UAC and the UA of the user A is the UAS. Therefore, a UA is generally a combination of UAS and UAC. Physically, a UA may be a SIP-enabled mobile terminal or a soft telephone terminal on a personal computer.

A SIP server is a logical network entity that forwards a request or a response to a UA. The SIP server provides a UA in the local domain with services including user registration, Internet Protocol, IP, address association, and intra-domain or inter-domain routing of a SIP message. Functionally, a SIP server may include the following independent logical entities:

SIP registrar: When a UA accesses a network, the UA needs to register with the registrar. The registration information may be written in a location server, which is not a SIP network element and provides a UA location database. During a SIP communication session, the SIP registrar searches the IP address and other related information of a participant in the session and sends the information to a SIP proxy server.

SIP proxy server: The proxy server routes an intra-domain or inter-domain request transmitted or received by a UA. It obtains address information in association with the UA by querying the SIP registrar.

SIP redirect server: Directs a SIP message to outside the local domain for the SIP proxy server.

The different logical entities of a SIP server may run on one hardware device or difference hardware devices. A SIP server may be regarded as a combination of UAS and UAC. The endpoint receiving a message from a UA or a network is a UAS; the endpoint transmitting a message to a UA or a network is a UAC.

There are various delegation requirements in SIP-enabled services, for example, delegatee user A to publish presence information for user B, which means user A is allowed to publish presence information of user B; or for another example, delegatee user A to transmit or receive messages for user B. For description purposes, a user agent is described hereinafter as a user processor (still abbreviated to UA) and accordingly, a SIP server is described as a service processor. In addition, because a user operation always requires the collaboration of the UA and the service processor based on the network configuration or user settings, some operations may be executed on the UA or the service processor that provides the forwarding service for the UA. Therefore, the user processor and service processor are both referred to herein as a SIP processor, and processor for ease of description. For example, a transmitting processor refers to a transmitting UA or a service processor that provides the forwarding service for the transmitting UA.

In the conventional art, delegation on a service is usually implemented by configuring a delegation function for the specific service. This means the delegation function is implemented at the service level. In the research and practice of the conventional art, however, the inventor finds that the conventional art is subject to the following defect: the delegation logic must be configured for a service to realize delegation of the specific service; if delegation needs to be realized on different services, a separate service logic must be designed. This is a duplication of the service function which hinders multiplexing of the function and hampers the uniform management of delegation.

### Summary of the Invention

Embodiments of the present invention provide methods for implementing delegated transmission of a SIP message at the protocol layer, wherein the delegated transmission means that a delegatee is allowed to transmit or receive messages for a delegator. One method includes: the delegated transmission means that the delegatee is allowed to transmit or receive messages for delegator;obtaining, by a delegatee processor, choice information of a delegator; generating, by the delegatee processor, a delegation message which comprises a delegation attribute header field that carries information of the delegator; and sending, by the delegatee processor, the delegation message to a receiver; wherein before generating, by the delegatee processor, the delegation message, the method further comprises: sending, by the delegatee processor, an authentication request message to a delegator; returning, by a delegator processor, authentication information in response to the authentication request message wherein the delegation message includes the authentication information, which indicates that the delegator allows the delegatee to send the delegation message; and receiving, by the delegatee processor, the authentication information; and wherein the step of generating a delegation message further comprises: placing the authentication information in the delegation message.

Embodiments of the present invention also provide SIP processors in accordance with the above methods.

One SIP processor includes: a choice obtaining unit, adapted to obtain choice information of a delegator; a message generating unit, adapted to generate a delegation message, which comprises a delegation attribute header field that carries information of the delegator; a delegated transmitting unit, adapted to send the delegation message to a receiver; and an authentication obtaining unit, adapted to send an authentication request message to the delegator and receive authentication information returned by a delegator processor in response to the authentication request messagewhere the delegated transmission means that the delegatee is allowed to transmit or receive messages for delegator; and the delegation message generated by the message generating unit further comprises the authentication information, which indicates that the delegator allows the delegatee to send the delegation message.

A computer program product, comprising computer program code, which, when executed by a computer unit, causes the computer unit to perform the processes of claims 1 to 4.

In the embodiments of the present invention, delegation-related header fields or header field parameters in a SIP message are extended so that a SIP processor can carry out processing in accordance with the extended header fields or header field parameters and realize delegation at the SIP layer. Because delegation is implemented at the SIP layer, the delegation mechanism is independent of services and therefore can be applied to different services. This facilitates multiplexing and uniform management of the delegation function.
WO2007/036143 A (HUAWEI TECH CO LTD [CN]; TIAN LINYI [CN]; ZHAO YANG [CN]; SUN QIAN [CN] 5 April 2007 (2007-04-05)) discloses a method of distributing the presence information, includes: delegated presentity client or the application server transmits the publishing information of the presentity client side to the presence server; when the presence server judges that the received information is not published by delegation; the presence server transmits the presence information obtained from the process of the above information to the watcher client which subscribed in advance the presence information; when the presence server judges that the received information is published by delegation; the presence server checks the publication by the delegated presentity client or the application server is permitted according to the delegation publication authorization rules, checks the which contents that are permitted to be published according to the delegation content authorization rules, filters contents, processes the information and sends the processed information to the watcher client which subscribed in advance the presence information.
WO 2007/126272 A (SAMSUNG ELECTRONICS CO LTD [KR] 8 November 2007 (2007-11-08)) discloses a method in which a delegated client sends a request message containing operation information, a delegated client identity (ID), and a delegating client ID at the time of sending an operation request to a target system. The target system receives the request message and delegation-authorizes the delegated client by examining whether the delegating client is authorized to perform the operation requested by the request message and also whether the delegating client has delegated the authority to perform the operation to the delegated client sending the request message using the delegating client ID included in the request message. A new header is provided which includes ID information of the delegating client in the request message. When receiving the request message, the target system performs a procedure for authenticating and authorizing not only the delegated client but also the delegating client using the delegating client ID.

### Brief Description of the Drawings

Figure 1 shows a procedure of a method for delegated transmission of a SIP message in a first method embodiment of the present invention;

Figure 2 shows a procedure of a method for delegated transmission of a SIP message in a second method embodiment of the present invention;

Figure 3 shows a procedure of a method for receiving a delegation SIP message in a third method embodiment of the present invention;

Figure 4 shows a procedure of a method for delegated transmission of a SIP message in a fourth method embodiment of the present invention;

Figure 5 shows a procedure of a method for receiving a delegation SIP message in a fifth method embodiment of the present invention;

Figure 6 shows a procedure of a method for delegated reception of a SIP message in a sixth method embodiment of the present invention;

Figure 7 shows a logical structure of a SIP processor in a first apparatus embodiment of the present invention;

Figure 8 shows a logical structure of a SIP processor in a second apparatus embodiment of the present invention;

Figure 9 shows a logical structure of a SIP processor in a third apparatus embodiment of the present invention;

Figure 10 shows a logical structure of a SIP processor in a fourth apparatus embodiment of the present invention;

Figure 11 shows a logical structure of a SIP processor in a fifth apparatus embodiment of the present invention;

Figure 12 shows a logical structure of a SIP processor in a sixth apparatus embodiment of the present invention;

Figure 13 shows a logical structure of a SIP processor in a seventh apparatus embodiment of the present invention;

Figure 14 shows a message flowchart where the second and third method embodiments of the present invention are applied to an INVITE method;

Figure 15 shows a message flowchart where the second and third method embodiments of the present invention are applied to a MESSAGE method; and

Figure 16 shows a message flowchart where the fourth and fifth method embodiments of the present invention are applied to an INVITE method.

### Detailed Description of the Invention

Embodiments of the present invention provide methods for delegated transmission/reception of a SIP message by extending delegation related header fields or header field parameters in a SIP message so that a SIP processor may carry out processing in accordance with the extended header fields or header field parameters and implement delegation at the SIP layer. Embodiments of the present invention also provide a method for receiving a message transmitted by means of delegation in the methods for delegated transmission of a SIP message and the corresponding SIP processors. The embodiments are described hereinafter in detail.

Method embodiment 1:

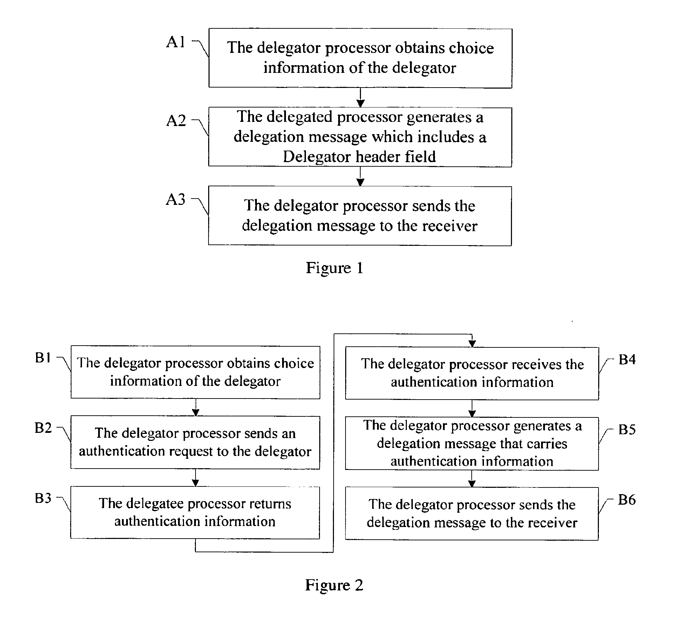

As shown in Figure 1, a method for delegated transmission of a SIP message includes:

A1. A delegatee processor obtains choice information of a delegator.

The delegatee processor may obtain choice information of the delegator according to information entered by a delegatee, such as a delegator identifier entered by the delegatee in the user interface; or the delegatee processor may choose a delegator according to a rule set by the delegatee.

A2. The delegatee processor generates a delegation message which includes a delegation attribute header field that carries information of the delegator.

A message transmitted via the delegated transmission mechanism is described as a delegation message. In this embodiment, a delegation message is similar to a common SIP message transmitted by the delegatee as a common user. The main difference is that an indicator is necessary in the delegation message to indicate that the message is transmitted on behalf of another party. Therefore, a delegation attribute header field (Delegator header field hereinafter) is added on the basis of a common SIP message to carry information of the delegator, such as the SIP address of the delegator (SIP URI or SIPS URI, where URI means Uniform Resource Identifier). An example of the Delegator header field is as follows:
Delegator: B@example.com
Where B@example.com is the SIP URI of the delegatee user B.

Further, to inform the reason for delegated transmission to message receiver, a reason attribute header field (Delegation-Reason header field hereinafter) may be added to the delegation message when the message is generated. The Delegation-Reason header field explains the reason of delegation. An example of the Delegation-Reason header field is as follows:
Delegation-Reason: on vacation
Where, "on vacation" is the reason of delegation.

In addition, to ensure that the message receiver identifies and processes delegation related information in the delegation message, such as the Delegator and the Delegation-Reason header fields, a delegation tag may be set in the Require header attribute field (Require header field hereinafter)of the delegation message. The Require header field is a type of attribute header field that may be included in a SIP message. A tag included in the Require header field notifies the receiver what SIP extension should be used to process the message. In this embodiment of the present invention, a delegation tag is extended for the Require header field to indicate that a network element processing the message must support the delegation mechanism. An example of the Require header field in this embodiment of the present invention is as follows:
Require: delegation

In practice, the Require header field may further include other tags.

Similar to the setting of the Require header field, the delegation tag may be set in the Support attribute header field (Support header field hereinafter) field of the delegation message to notify the receiver that the delegatee supports the delegation mechanism. The Support header field is also an attribute header field that may be included in a SIP message. An example of the Support header field in this embodiment is as follows:
Support: delegation

Likewise, in practice, the Support header field may further include other tags to indicate other extensions that the delegatee supports.

A3. The delegatee processor sends the delegation message to the receiver.

In this embodiment of the present invention, the delegatee processor sends the delegation message to the receiver directly.

In this embodiment, the delegatee processor may be a delegatee user processor or a delegatee service processor, or both the delegatee user processor and the service processor. For example, the delegatee user processor may generate a common SIP message, and the delegator service processor provides the delegation service, i.e. delegation related header fields and parameters are added to the common SIP message in order to generate a final delegation message and the final delegation message is transmitted.

In this embodiment, delegated transmission is implemented at the SIP layer so that delegated transmission is independent of services and therefore can be applied to different services. This facilitates the multiplexing and uniform management of delegated transmission.

Method embodiment 2:

A method for delegated transmission of a SIP message is provided. A process where the delegator authenticates the delegated transmission behavior of the delegatee is added on the basis of the first method embodiment. As shown in Figure 2, a procedure of the method in this embodiment includes:

B1. The delegatee processor obtains choice information of the delegator.

This step may refer to the step A1 in the first method embodiment.

B2. The delegatee processor sends an authentication request to the delegator.

The authentication request may be represented by a specific message or the specific content of a message. In this embodiment, a message sent by the delegatee requesting authentication is described as an authentication request message. To help the delegator to authenticate the delegated transmission of the delegatee, information related to the delegation message may be carried in the authentication request message, specifically:

(1) The delegatee processor generates an original delegation message. The original delegation message includes the basic contents of the delegation message but not include the authentication information.

(2) The delegatee processor generates an authentication request message, where the message body of the authentication request message includes the original delegation message or fragments of the original delegation message.

The original delegation message may be placed in the authentication request message so that the delegator obtains all information of the original delegation message; alternatively, the authentication request message may include some fragments of the original delegation message such as some major parameters and header fields. For example, the authentication request message may include the Method name of the original delegation message, a From header field that carries the delegatee identifier, and a To header field that carries the receiver identifier.

In addition, similar to the first method embodiment, to ensure that the delegator that receives the authentication request message correctly processes the authentication request message requesting to authenticate the delegation message, i.e. supports the delegation mechanism in this embodiment, a delegation tag may be set in the Require header field of the authentication request message.

(3) The delegatee processor sends the authentication request message to the delegator.

B3. The delegator processor returns authentication information in response to the authentication request message.

When the delegator receives the authentication request message, if a delegation tag is set in the Require header field of the authentication request message, the delegator processor may first determine that itself supports the delegation mechanism according to the requirement of the delegation tag and then process the authentication request of the delegatee. Specifically, this process includes:

(1) The delegator processor obtains the original delegation message or fragments of the original delegation message in the authentication request message, and generates authentication information according to its delegation policy. The authentication information may be signatures for some header fields or requests in the original delegation message.

Further, when the delegator signs, the delegator may specify the valid period of the delegation, which may be valid only once or valid in a period of time. If the delegation is valid only once, the delegatee should send an authentication request to the delegator every time when the delegatee sends a message on behalf of the delegator. If the delegation is valid for a period of time, when the delegatee sends another message on behalf of the delegator again in the valid period, the delegatee may use the already obtained authentication information without the need of request again.

(2) The delegator processor generates a success response message to the authentication request message. The message body of the success response message includes the authentication information. Based on the normal request/response mechanism of SIP, in this embodiment, a success response message to the authentication request message carries the authentication information. For the authentication request message, the delegator processor may return other response information. For example, if the delegator processor does not support the delegation mechanism or the authentication is unsuccessful, the delegator processor may return an error or failure response message, indicating that the authentication is unsuccessful.

(3) The delegator processor sends the success response message that carries authentication information to the delegatee.

B4. The delegatee processor receives the authentication information.

From the success response to the authentication request message, the delegatee processor may obtain the authentication information carried in the success response message.

B5. The delegatee processor generates a delegation message that carries the authentication information.

Based on the authentication request mode in step B2, the delegatee processor may add the obtained authentication information in the message body of the original delegation message in order to generate the final delegation message.

Similarly to the first method embodiment, a Delegator header field that carries information of the delegator is set in the delegation message. Further, the delegation message may include a Delegation-Reason header field, and the Require and Support header fields that carry the delegation tag, as in step A2 in the first method embodiment.

B6. The delegatee processor sends the delegation message to the receiver.

In this embodiment of the present invention, the delegatee processor sends the delegation message to the receiver directly.

In this embodiment, the delegatee processor that processes the authentication request may be a delegatee user processor or a delegatee service processor. The delegator processor that executes the authentication may be a delegator user processor or a delegator service processor.

In this embodiment, a processor for authenticating the delegated transmission of the delegatee is added on the basis of the first method embodiment so as to enhance the security of the delegated transmission mechanism. It should be understood that the authentication information in a delegation message is optional. If the delegation message includes the authentication information, it indicates that the delegator allows the delegatee to send the delegation message; if the delegation message does not include the authentication information, the receiver may accept or reject the delegation message depending on the policy of the receiver. The delegator may use various signing mechanisms to authenticate the delegation message. This embodiment does not limit the signing mechanism in use.

Method embodiment 3:

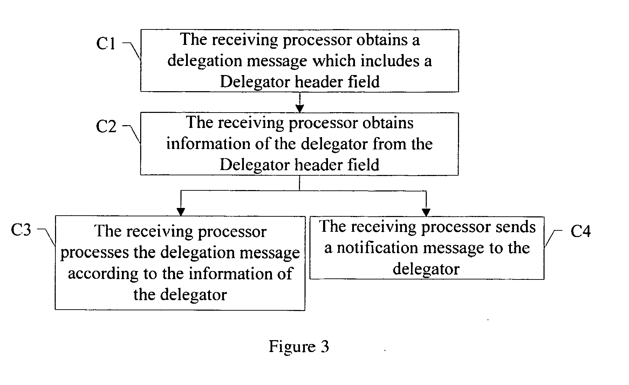

As shown in Figure 3, the procedure of a method for receiving a delegation SIP message includes:

C1. The receiving processor obtains a delegation message which includes a Delegator header field.

The delegation message received by the receiving processor is similar to a common SIP message sent by the delegatee, with a Delegator header field included to indicate that the message is transmitted on behalf of another party. The delegation message may also include other information related delegation, such as a Delegation-Reason header field and authentication information.

C2. The receiving processor obtains information of the delegator from the Delegator header field.

After the receiver receives the delegation message, if a delegation tag is set in the Require header field of the message, the receiving processor determines that itself supports the delegation mechanism according to the requirement of the delegation tag and then continues with further processing. For when to check the Require header field and how to process the check result, the method provided in the conventional SIP specification may be referred. For example, if the receiver finds that itself does not support the extensions according to indication of some tags in the Require header field, the receiver may generate an error response to notify the peer end which tags are not supported by the receiver.

C3. The receiving processor processes the delegation message according to the information of the delegator.

The receiving processor may process the delegation message according to the method type in accordance with the message. For example, in the case of a message of the INVITE method, the receiving processor may display information of the delegator, such as the name of the delegator, on the user interface of the receiver and executes processing according to the choice of the receiver.

In particular, to increase the security, before carrying out other processing of the delegation message, the receiving processor may authenticate the delegation message according to the information of the delegator. This embodiment provides three authentication schemes:

Scheme 1: The receiving processor has delegation information configured by the delegator.

In this scheme, the authentication process is: the receiving processor authenticates the delegation message according to the delegator information obtained from the Delegator header field and the preset delegation information, and decides whether to accept the delegation message according to the authentication result. For example, if deciding to receive the message, the receiving processor continues with further processing according to the message type; if deciding not to receive the message, the receiving processor may return a rejection or error message.

Scheme 2: The delegation message includes authentication information of the delegator.

For example, the receiver receives a delegation message transmitted in the method in the second embodiment. In this scheme, the authentication process is: the receiving processor verifies the authentication information of the delegator carried in the delegation message according to the delegator information obtained from the Delegator header field and decides whether to accept the delegation message according to the verification result.

Scheme 3: The receiving processor has no preset delegation information and the delegation message carries no authentication information.

In this scheme, the receiving processor may contact the delegator to inquire whether the delegatee is allowed to transmit the delegation message on behalf of the delegator. The procedure includes:

(1) The receiving processor sends an authentication request message to the delegator. The authentication request message includes the delegatee identifier and/or the delegation message, or includes the delegatee identifier and/or fragments of the delegation message.

(2) The delegator processor returns an authentication reply message in response to the authentication request message. The authentication reply message includes the authentication result.

(3) The receiving processor decides whether to accept the delegation message according to the authentication result.

C4. No matter whether the receiving processor authenticates the delegation message, the receiving processor may send a notification message to the delegator after receiving the delegation message and obtaining the delegator information from the Delegator header field. The notification message includes information of the delegation message. Thereby, the delegator may obtain the delegated transmission of the delegatee and the related message contents. This enhances the security of information.

In this embodiment, the receiving processor may be a receiving user processor, or a receiving service processor, or both a receiving user processor and a receiving service processor. For example, the receiving service processor authenticates the delegation message and forwards the message to the receiving user processor after the authentication is successful for further processing. Whether the receiving service processor carries out the authentication depends on the configuration information set on the service processor by the receiver.

The method in this embodiment can receive delegation messages transmitted according to the first or second method embodiment.

Method embodiment 4:

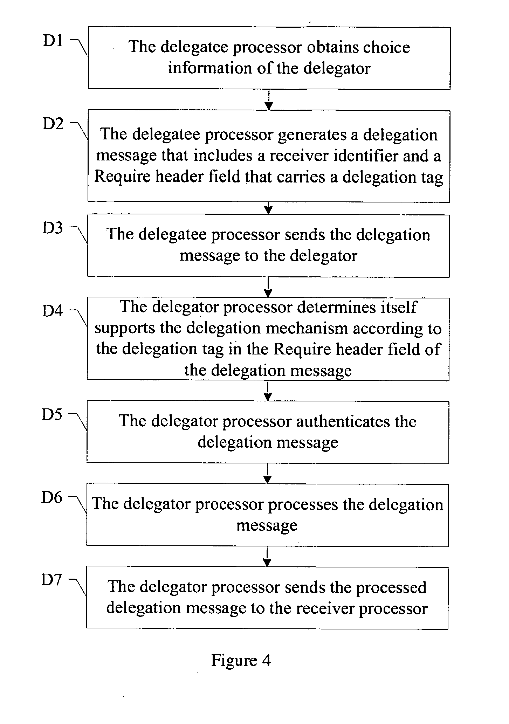

A method for delegated transmission of a SIP message is provided, where indirect transmission is adopted unlike the first and second method embodiments. The delegatee sends a delegation message to the delegator. The delegator processes the message and then forwards the message to the receiver. As shown in Figure 4, a procedure of the method in this embodiment includes:

D1. The delegatee processor obtains choice information of the delegator.

This process may refer to the step A1 in the first method embodiment.

D2. The delegatee processor generates a delegation message which includes a receiver identifier and a Require header field that carries a delegation tag.

Based on the conventional SIP message format, the receiver identifier may be set in a To header field of the delegation message.

D3. The delegatee processor sends the delegation message to the delegator.

D4. The delegator processor receives the delegation message and determines that itself supports the delegation mechanism, i.e. able to identify and process the delegation message correctly, according to the delegation tag in the Require header field of the delegation message.

D5. The delegator processor authenticates the delegation message and decides to allow processing the delegation message according to the authentication result.

This process is optional and the purpose is to determine the operation right of the delegatee via authentication.

D6. The delegator processor processes the delegation message.

This process may be executed according to settings related to delegated transmission on the delegator processor. The specific settings may be configured by the delegator. Some optional processes are as follows:

Process 1: The Request-URI of the delegation message is changed to the receiver identifier carried in the delegation message. The Request-URI is for routing of a message. The Request-URI of the delegation message received by the delegator processor is usually a SIP address of the delegator and therefore should be changed to the receiver identifier before the delegation message is forwarded.

Process 2: The delegation tag in the Require header field of the delegation message is deleted. This means the delegator does not require the receiver to support the delegation mechanism. In this case, if the delegation message does not include other information related to the delegation mechanism, the delegation message received by the receiver may be regarded as a common SIP message; furthermore, the receiver may not be able to identify that the message is directly sent by the delegatee, or sent by the delegatee to the delegator and then forwarded by the delegator.

Process 3: If the delegator processor authenticates the delegation message, authentication information of the delegator processor may be added to the delegation message. In this case, the delegation tag in the Require header field needs to be retained. In addition, if authentication is executed by the delegator user processor, this process may be omitted.

Process 4: A Delegator header field is added to the delegation message. The Delegator header field includes information of the delegator. This means the delegator wishes the receiver to be aware of the delegator of the delegation message. In this case, the delegation tag in the Require header field needs to be retained.

The above processes can be chosen simultaneously on condition that the processes do not conflict.

D7. The delegator processor sends the processed delegation message to the receiver indicated by the receiver identifier.

In this embodiment, the delegatee processor may be a delegatee user processor or a delegatee service processor. The delegator processor in this embodiment may be a delegator user processor or a delegator service processor. The delegator processor may authenticate or not authenticate the delegation message and the authentication result may be added or not added to the delegation message.

In this embodiment, indirect delegated transmission is implemented at the SIP layer. Because the delegation message needs to be forwarded by the delegator, the security is better and it is more convenient for the delegator to authenticate the delegation message. In addition, the delegation message transmitted via indirect delegation may not require the receiver to support the delegation mechanism and therefore the compatibility is good.

Method embodiment 5:

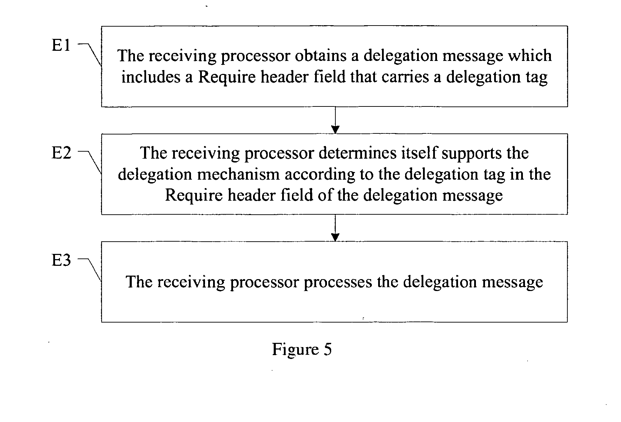

A method for receiving a delegation SIP message is provided, where the message is transmitted via indirect delegation. As shown in Figure 5, a procedure of the method includes:

E1. The receiving processor obtains a delegation message which includes a Require header field that carries a delegation tag.

E2. The receiving processor determines, according to the delegation tag in the Require header field, that itself supports the delegation mechanism, i.e. being able to identify and process delegation messages correctly.

E3. The receiving processor processes the delegation message.

This process may be executed according to settings related to delegated transmission on the receiving processor. The specific settings may be configured by the receiver. Some optional processes are as follows:

Process 1: If the delegation message includes a Delegator header field, the receiving processor may obtain information of the delegator from the Delegator header field.

Process 2: Further, the receiving processor may authenticate the delegation message according to the information of the delegator and decide whether to accept the delegation message according to the authentication result. For indirect delegation, because the delegation message passes the delegator and the delegator may have already authenticated the message, the authentication step may be or not be omitted at the receiving end.

In addition, if the delegation message further includes authentication information of the delegator, the authentication process may be a process of verifying the authentication information of the delegator according to the information of the delegator.

After the receiver verifies that the authentication information is from the delegatee user (which indicates that the delegation message is authenticated by the delegator user processor) or the authentication information is from the delegatee service processor (which indicates that the delegation message is authenticated by the delegatee service processor), the receiver may accept or reject the message according to the local policy of the receiver.

In this embodiment, the receiving processor may be a receiving user processor, or a receiving service processor, or both a receiving user processor and a receiving service processor. For example, the receiving service processor authenticates the delegation message and forwards the message to the receiving user processor after the authentication is successful for further processing. Whether the receiving service processor carries out the authentication may be determined according to the configured information set on the service processor by the receiver.

The method in this embodiment can receive delegation messages transmitted according to the fourth method embodiment.

Method embodiment 6:

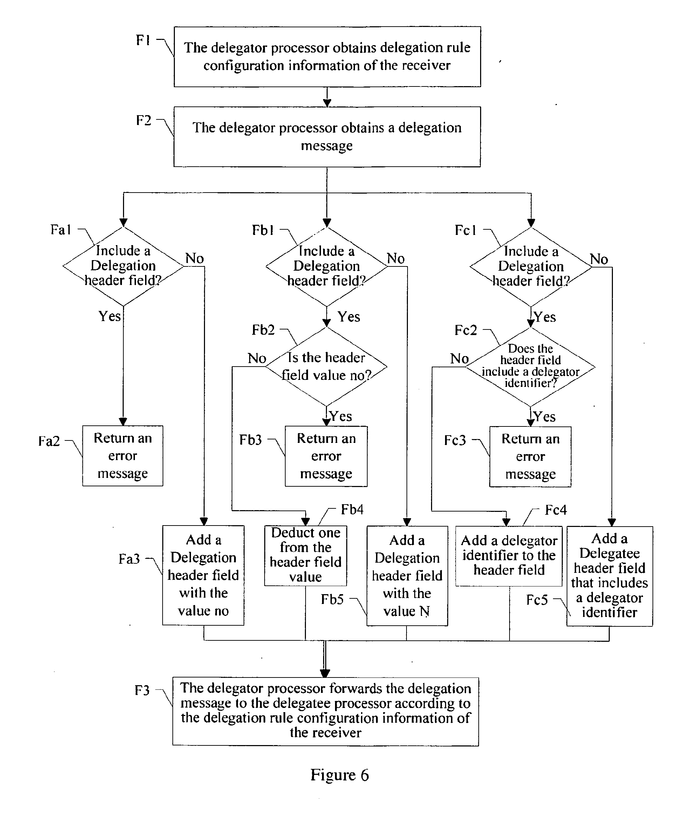

As shown in Figure 6, a method for delegated reception of a SIP message includes:

F1. The delegator processor obtains the delegation rule configuration information of the receiver.

The delegation rule configuration information of the receiver specifies who is delegated to receive a SIP message. Normally, this rule is set by the delegator user. The delegator user may use a SIP method, e.g. sending a special SIP message to configure, or use a non-SIP method, e.g. directly setting a parameter. The following gives respective examples of the two configuration schemes:

Scheme 1: Direct configuration.

The user may set a receiver delegation rule directly on the local SIP processor, which may be a user processor or a service processor. The receiver delegation rule may be described by a XML document. For example, the root element of the receiver delegation rule may be name <delegation-rules>, which includes multiple <rule> elements; each <rule> element includes a <condition> sub-element and an <action> sub-element. The <condition> sub-element specifies the applicable condition of the rule; the <action> sub-element specifies the delegatee when the condition is met.

Scheme 2: Configuration via sending a SIP message.

The delegation rule configuration information of the receiver is configured on the service processor. The delegator service processor executes the reception delegation. The user may use a REGISTER message to set who is delegated to receive a SIP message. The configuration procedure includes:

(1) The delegator user processor sends a REGISTER message to the delegator service processor. The REGISTER message includes a Contact attribute header field (Contact header field hereinafter), which includes a delegatee identifier that is marked by a delegation tag, such as the address of the delegatee. The REGISTER message is a message in the conventional SIP specification. The parameter of the Contact header field of the REGISTER message may be extended to carry a delegation tag to indicate that the address of the corresponding entry is the address of the delegatee.

(2) The delegator service processor records the delegatee identifier marked by the delegation tag as the delegation rule configuration information of the receiver of the user according to the received REGISTER message.

F2. The delegator processor obtains the delegation message.

A message forwarded via the delegated reception mechanism is described as a delegation message herein.

F3. The delegator processor forwards the delegation message to the delegatee according to the delegation rule configuration information of the receiver. For example, if the delegator service processor executes the delegated reception, the delegator service processor obtains recorded address of the delegatee of the corresponding user after receiving a SIP message and forwards the SIP message to the delegatee.

To avoid cyclic forwarding of a delegation message, i.e. the delegatee forwards a received delegation message to its own, the delegator processor may execute an anti-cycling forwarding policy before forwarding the delegation message. The delegator processor may also forward the delegation message directly according to the delegatee information obtained from the receiver delegation rule. This embodiment provides three anti-cycling forwarding policies:

Policy 1: Delegated forwarding for only once. The procedure includes:

Fa1. It is determined whether the delegation message includes a forwarding attribute header field (Delegation header field hereinafter), and if the delegation message includes the Delegation header, the procedure goes to step Fa2; if the delegation message does not include the Delegation header, the procedure goes to step Fa3.

Fa2. It is determined whether the value of the Delegation header field is no, which indicates that the delegation message does not accept further delegated forwarding and continue with no further delegated reception, and an error message may be returned.

Fa3. A Delegation header field is added to the delegation message and the value of the Delegation header field is set to no. Thus, even if the delegatee processor has delegated another party for message reception, the delegation message may not be further forwarded.

Policy 2: Limited number of delegated forwards. The procedure includes:

Fb1. It is determined whether the delegation message includes a Delegation header field; if the delegation message includes the Delegation header field, the procedure goes to step Fb2; the delegation message does not include the Delegation header field, the procedure goes to step Fb5.

Fb2. It is determined whether the value of the Delegation header field is no, and if the value of the Delegation header field is no, the procedure goes to Fb3; if the value of the Delegation header field is not no, the procedure goes to step Fb4.

Fb3. The process of delegated reception needs not to be performed and an error message may he returned

Fb4. One from the Delegation value is deducted. If the original value of the Delegation header field is one, a new value is set to no, which indicates the delegation message is forwarded for the maximum times and does not allow further delegated forwarding.

Fb5. A Delegation header field is added to the delegation message and the value of the Delegation header field is set. Suppose the value is N, which indicates that the delegation message may be delegation-forwarded for N+1 times.

Policy 3: The delegated forwarding address is recorded and determined. The procedure includes:

Fc1. It is determine whether the delegation message includes a forwarding address header field (Delegatee header field hereinafter) and if the delegation message includes the Delegatee header field, the procedure goes to step Fc2; if the delegation message does not include the Delegatee header field, the procedure goes to step Fc5.

Fc2. It is checked whether the Delegatee header field includes the identifier of a delegator, i.e. the current receiver; and if the Delegatee header field includes the identifier of the delegator, the procedure continues with step Fc3 for cyclic forwarding; if the Delegatee header field does not include the identifier of the delegator, the procedure continues with step Fc4.

Fc3. The process of delegated reception needs not to be performed and an error message may be returned.

Fc4. A delegator identifier is added to the Delegatee header field.

Fc5. The Delegatee header field is added to the delegation message and the delegator identifier is set in the Delegatee header field.

In this embodiment, the delegator processor may be a delegator user processor or a delegator service processor.

In this embodiment, delegated reception is implemented at the SIP layer so that delegated reception is independent of services and therefore can be applied to different services. This facilitates the multiplexing and uniform management of delegated reception.

. It is understandable that a software implementing the delegated transmission and delegated reception of a SIP message in embodiments of the present invention may exist in a computer readable medium., when a delegatee processor execute a software implementing delegated transmission, the process includes the following procedure: obtaining choice information of the delegator, generating a delegation message which includes a Delegator header field that carries information of the delegator, and sending the delegation message to the receiver. Accordingly, when a receiving software is executed on the receiving processor, the process includes the following procedure: obtaining a delegation message which includes a Delegator header field, obtaining information of the delegator from the Delegator header field, and processing the delegation message according to the information of the delegator.

When another type of software implementing delegated transmission is executed on a delegatee processor, the process includes the following procedure: obtaining choice information of the delegator, generating a delegation message which includes a receiver identifier and a Require header field that carries a delegation tag, and sending the delegation message to the delegator. When another type of software is executed on a delegator processor, the process includes the following procedure: determining that the delegator processor itself supports the delegation mechanism according to the delegation tag in the Require header field, processing the delegation message accordingly, and sending the processed delegation message to the receiver specified by the receiver identifier. The corresponding receiving software, when being executed on the receiving processor, the process includes the following procedure: obtaining a delegation message which includes a Require header field that carries a delegation tag; determining the receiving processor itself support the delegation mechanism according to the delegation tag in the Require header field, and processing the delegation message.

When the software implementing delegated reception is executed on the delegator processor, the process includes the following procedure: obtaining the delegation rule configuration information of the receiver, obtaining a delegation message, and forwarding the delegation message to the delegatee according to the delegation rule configuration information of the receiver.

The readable medium may be a read only memory/random access memory "ROM/RAM", a magnetic dish or a compatible disk.

The following describes embodiments of a SIP processor in the present invention in detail.

Apparatus embodiment 1:

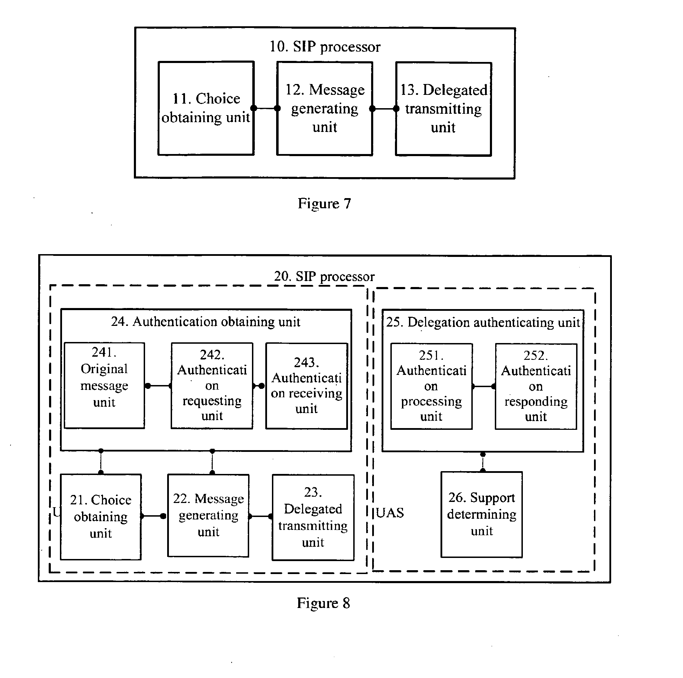

As shown in Figure 7, a SIP processor 10 includes:

a choice obtaining unit 11, adapted to obtain choice information of the delegator;

a message generating unit 12, adapted to generate a delegation message which includes a delegation attribute header field that carries information of the delegator, and the information of the delegator is obtained by the choice obtaining unit 11; the message generating unit 12 may also place a Delegation-Reason header field and a Require header field in the delegation message according to actual needs; and

a delegated transmitting unit 13, is adapted to transmit the delegation message generated by the message generating unit 12 to a receiver.

The SIP processor in this embodiment may act as a delegatee processor executing the first method embodiment.

Apparatus embodiment 2:

As shown in Figure 8, a SIP processor 20, where an authentication related logical structure is added on the basis of the first apparatus embodiment, includes:

a choice obtaining unit 21, adapted to obtain choice information of the delegator;

an authentication obtaining 24, adapted to send an authentication request to the delegator and receive authentication information returned by the delegator processor in response to the authentication request; where, specifically the authentication obtaining unit 24 may include the following logical units:

an original message unit 241, adapted to generate an original delegation message;

an authentication requesting unit 242, adapted to generate an authentication request message, where the message body of the authentication request message includes the original delegation message or fragments of the original delegation message generated by the original message unit 241, and send the authentication request message to the delegator; and

an authentication receiving unit 243, is adapted to obtain authentication information from a success response message returned by the delegator in response to the authentication request message sent by the authentication requesting unit 242;

a message generating unit 22, adapted to generate a delegation message which includes the authentication information obtained by the authentication obtaining unit 24 and a Delegator header field that carries information of the delegator obtained by the choice obtaining unit 21; where the message generating unit 22 may also place a Delegation-Reason header field and a Require header field in the delegation message according to actual needs. The message generating unit 22 may add the authentication information obtained by the authentication receiving unit 243 to the message body of the original delegation message generated by the original message unit 241 to generate the delegation message; and

a delegated transmitting unit 23, adapted to transmit the delegation message generated by the message generating unit 22 to a receiver.

The choice obtaining unit 21, message generating unit 22, delegated transmitting unit 23, and authentication obtaining unit 24 are included in the User Agent Client "UAC" part of the SIP processor in this embodiment. The SIP processor in this embodiment may further include a User Agent Server "UAS" part related to the authentication of delegated transmission. The UAS part includes:

a delegation authenticating unit 25, adapted to return authentication information in response to an authentication request sent by a delegatee, where, specifically, the delegation authenticating unit 25 may include the following logical units:

an authentication processing unit 251, is adapted to obtain an original delegation message or fragments of the original delegation message included in the authentication request message sent by the delegatee and generate authentication information according to its own delegation policy; and

an authentication responding unit 252, is adapted to generate a success response message in response to the authentication request message, and send the success response message to the delegatee, where the message body of the success response message includes the authentication information generated by the authentication processing unit 251.

To ensure that the delegation authenticating unit 25 identifies and processes the obtained authentication request message correctly when the authentication request message includes a Require header field that carries a delegation tag, the UAS part of the SIP processor in this embodiment may further include:

a support determining unit 26, adapted to determine that the SIP processor supports the delegation mechanism according to the delegation tag in the Require header field before the delegation authenticating unit 25 processes the authentication request message.

It should be understood that a Require header field in a SIP message is already defined in the conventional specification. Therefore, the support determining unit 26 in this embodiment may be combined with a unit in a conventional SIP processor that determines support for the Require header field. This means the support determining function may be implemented by extending the function of the conventional support determining unit.

Based on the logical structure of the UAC part of the SIP processor in this embodiment, the SIP processor may act as a delegatee processor executing the second method embodiment; based on the logical structure of the UAS part of the SIP processor in this embodiment, the SIP processor may act as a delegator processor executing the second method embodiment.

Apparatus embodiment 3:

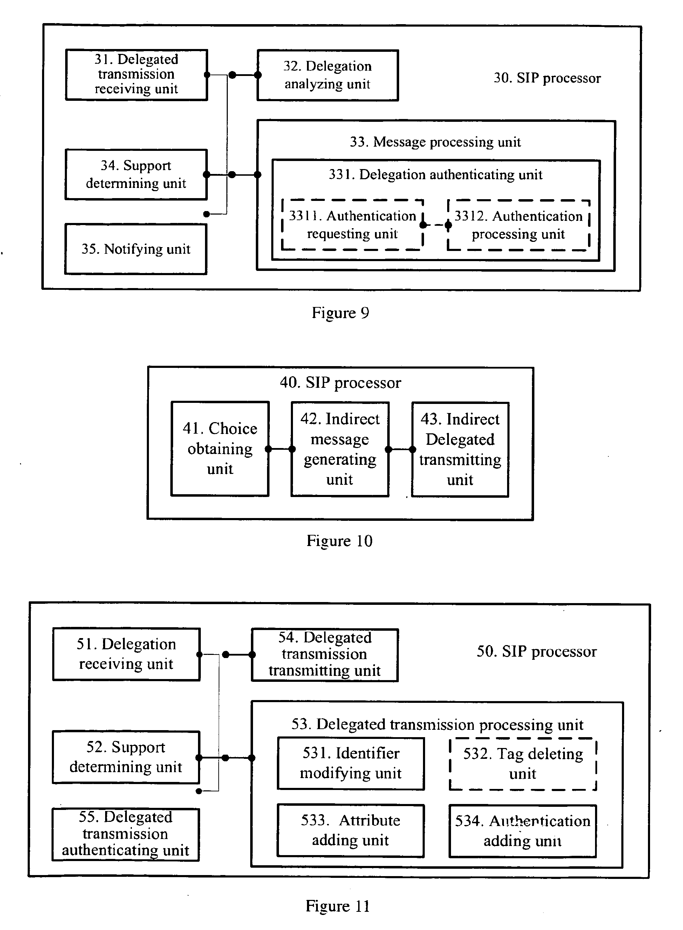

As shown in Figure 9, a SIP processor 30 includes:

a delegation message receiving unit 31, adapted to obtain a delegation message which includes a Delegator header field;

a delegation analyzing unit 32, adapted to obtain information of the delegator from the Delegator header field in the delegation message received by the delegated transmission receiving unit 31; and

a message processing unit 33, adapted to process the delegation message according to the information of the delegator obtained by the delegation analyzing unit 32: where, according to specific setting of the processing content, the message processing unit 33 may have a corresponding logical structure; for example, the message processing unit 33 may include a delegation authenticating unit 331 that authenticates the delegation message, and in addition, the message processing unit 33 may also include a logical structure that executes regular processing of a SIP message.

Based on different conditions, the delegation authenticating unit 331 may adopt different authentication schemes to provide different functions:

Scheme 1: When delegation information configured by the delegator is preset, the delegation authenticating unit 331 is adapted to authenticate the delegation message according to the information of the delegator obtained by the delegation analyzing unit 32 and the preset delegation information and decide whether to accept the delegation message according to the authentication result.

Scheme 2: When the delegation message obtained by the delegated transmission receiving unit 31 includes authentication information of the delegator, the delegation authenticating unit 331 is adapted to verify the authentication information of the delegator according to the information of the delegator obtained by the delegation analyzing unit 32 and decide whether to accept the delegation message according to the verification result.

Scheme 3: When there is no preset delegation information and the delegation message does not include authentication information of the delegator, the delegation authenticating unit 331 may include the following logical units (which are optional and therefore marked in broken lines in Figure 9):

an authentication requesting unit 3311, adapted to send an authentication request message to the delegator, where the authentication request message includes a delegatee identifier and/or the delegation message, or includes the delegatee identifier and/or fragments of the delegation message; and

an authentication processing unit 3312, adapted to obtain authentication result information from a reply message returned by the delegator in response to the authentication request message sent by the authentication requesting unit 3311 and decide whether to accept the delegation message according to the authentication result information.

To ensure that the delegation analyzing unit 32 identifies and processes the obtained delegation message correctly when the delegation message includes a Require header field that carries a delegation tag, the SIP processor in this embodiment may further include:

a support determining unit 34, adapted to determine that the SIP processor supports the delegation mechanism according to the delegation tag in the Require header field before the delegation analyzing unit 32 processes the delegation message.

In addition, the SIP processor in this embodiment may further include:

a notifying unit 35, adapted to send to the delegator a notification message which includes information of the delegation message after the delegation analyzing unit 32 obtains information of the delegator.

The SIP processor in this embodiment may act as a receiving processor executing the third method embodiment.

It should be understood that this embodiment describes the logical structure of the SIP processor acting as a message receiver. The SIP processor in this embodiment may be combined with the SIP processor in the first or second apparatus embodiment in a same apparatus that acts as a message transmitter. When the SIP processor in this embodiment is placed in a same user processor or service processor with the SIP processor in the second apparatus embodiment, the support determining unit 34 and the support determining unit 26 may be integrated. This means that the support determining unit in this apparatus embodiment may determine support for delegation tag in the Require header field of all received SIP messages without differentiating the message type.

Apparatus embodiment 4:

As shown in Figure 10, a SIP processor 40 includes:

a choice obtaining unit 41, adapted to obtain choice information of the delegator;

an indirect message generating unit 42, adapted to generate a delegation message which includes a receiver identifier and a Require header field that carries a delegation tag; and

an indirect delegated transmitting unit 43, adapted to send the delegation message generated by the indirect message generating unit 42 to the delegator determined by the choice obtaining unit 41.

The SIP processor 40 in this embodiment may act as a delegatee processor executing the fourth method embodiment.

Apparatus embodiment 5:

As shown in Figure 11, a SIP processor 50 includes:

a delegated receiving unit 51, adapted to receive a delegation message sent by the delegatee, where the delegation message includes a receiver identifier and a Require header field that carries a delegation tag;

a support determining unit 52, adapted to determine that the SIP processor 50 supports the delegation mechanism according to the delegation tag in the Require header field in the delegation message received by the delegated receiving unit 51;

a delegated transmission processing unit 53, adapted to process the delegation message after the support determining unit 52 determines that the SIP processor 50 supports the delegation mechanism; and

a delegated transmission transmitting unit 54, adapted to send the delegation message processed by the delegated transmission processing unit 53 to the receiver indicated by the receiver identifier.

To support authentication on a delegation message, the SIP processor 50 in this embodiment may further include:

a delegated transmission authenticating unit 55, adapted to authenticate the delegation message after the support determining unit 53 determines that the SIP processor 50 supports the delegation mechanism and before the delegated transmission processing unit 53 processes the delegation message, and decide to allow the delegated transmission processing unit 53 to process the delegation message according to the authentication result.

According to the processing content, the delegated transmission processing unit 53 may optionally include the following logical units:

an identifier modifying unit 531, adapted to change the Request-URI of the delegation message to the receiver identifier;

a tag deleting unit 532, adapted to delete the delegation tag in the Require header field of the delegation message;

an attribute adding unit 533, adapted to add a Delegator header field to the delegation message, where the Delegator header field includes information of the delegator, and

an authentication adding unit 534, adapted to add authentication information of the delegator processor to the delegation message after the delegated transmission authenticating unit 55 authenticates the delegation message successfully.

In the four optional logical units of the delegated transmission processing unit 53, if the attribute adding unit 533 or the authentication adding unit 534 is selected, the tag deleting unit 532 may not be selected simultaneously. Therefore, the tag deleting unit 532 is represented by a broken line in Figure 11.

The SIP processor 50 in this embodiment may act as a delegator processor executing the fourth method embodiment. The SIP processor 50 in this embodiment may be placed in a same device with the SIP processor acting as a delegatee processor in the fourth apparatus embodiment to support the device acting as the delegatee and delegator respectively.

Apparatus embodiment 6:

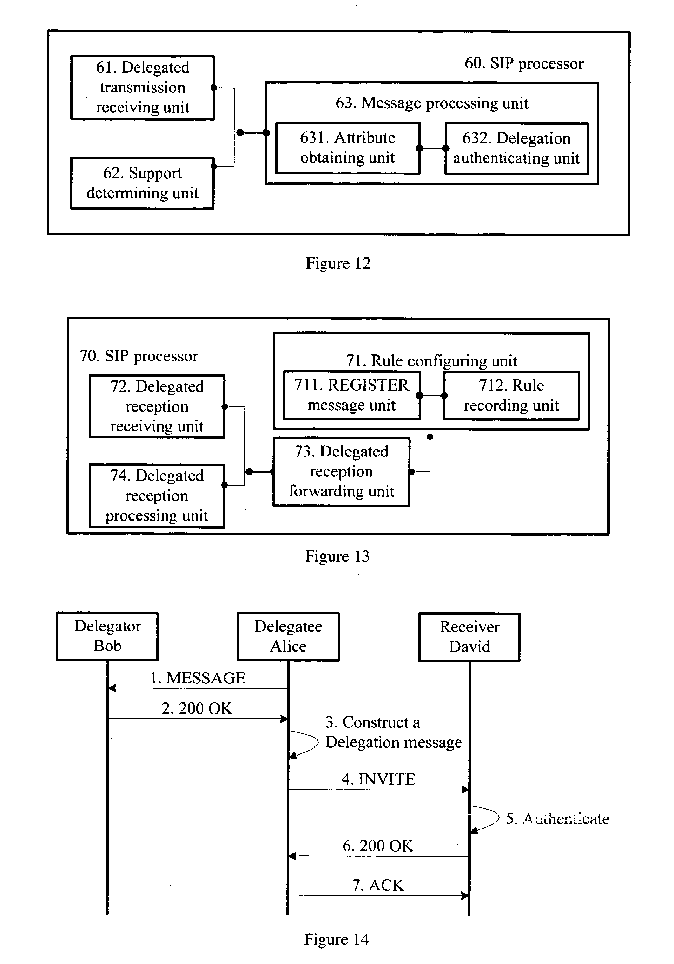

As shown in Figure 12, a SIP processor 60 includes:

a delegation message receiving unit 61, adapted to obtain a delegation message which includes a Require header field that carries a delegation tag;

a support determining unit 62, adapted to determine that the SIP processor 60 supports the delegation mechanism according to the delegation tag in the Require header field in the delegation message obtained by the delegated transmission receiving unit 61; and

a message processing unit 63, adapted to process the delegation message after the support determining unit 62 determines that the SIP processor 60 supports the delegation mechanism.

According to the processing content, the message processing unit 63 may optionally include the following logical units:

an attribute obtaining unit 631, adapted to obtain information of the delegator from the Delegator header field when the delegation message obtained by the delegated transmission receiving unit 61 includes a Delegator header field; and

a delegation authenticating unit 632, adapted to authenticate the delegation message according to the information of the delegator obtained by the attribute obtaining unit 631 and decide whether to accept the delegation message according to the authentication result.

The SIP processor 60 in this embodiment may act as a receiving processor executing the fifth method embodiment.

It should be understood that this embodiment describes the logical units of the SIP processor acting as a message receiver. The SIP processor in this embodiment may be placed in a same device with the SIP processor in the fourth or fifth apparatus embodiment. When the SIP processor in this embodiment is placed in a same user processor or service processor with the SIP processor in the fifth apparatus embodiment, the support determining unit 62 and the support determining unit 52 may be integrated.

Apparatus embodiment 7:

As shown in Figure 13, a SIP processor 70 includes:

a rule configuring unit 71, adapted to obtain delegation rule configuration information of the receiver; where, specifically, the rule configuring unit 71 may include the following logical units:

a REGISTER message unit 711, adapted to obtain a REGISTER message which include a Contact header field that carries a delegatee identifier marked by a delegation tag; and

a rule recording unit 712, adapted to record the delegatee identifier marked by a delegation tag as the delegation rule configuration information of the receiver according to the REGISTER message obtained by the registration message unit 711;

a delegated reception receiving unit 72, adapted to obtain a delegation message; and

a delegated reception forwarding unit 73, adapted to forward the delegation message received by the delegated reception receiving unit 72 to the delegatee according to the delegation rule configuration information of the receiver.

To avoid cyclic forwarding of the delegated reception, the SIP processor in this embodiment may further include a delegated reception processing unit 74 that executes an anti-cycling forwarding policy. With different forwarding policies, the delegated reception processing unit 74 may provide different functions:

Firstly, the delegated reception processing unit 74 is adapted to determine that the delegation message does not include a Delegation header field and add a Delegation header field to the delegation message, and set the value of the Delegation header field to no to indicate that the delegation message may not be further delegated forwarded, before the delegated reception forwarding unit 73 forwards the delegation message obtained by the delegated reception receiving unit 72.

Secondly, the delegated reception processing unit 74 is adapted to determine whether the delegation message includes a Delegation header field before the delegated reception forwarding unit 73 forwards the delegation message obtained by the delegated reception receiving unit 72.

If the delegation message includes a Delegation header field, the delegated reception processing unit 74 determines that the value of the Delegation header field is not no and deducts one from the value of the Delegation header field, or if the original value of the Delegation header field is one, sets the value of the Delegation header field to no to indicate that the delegation message does not allow further delegated forwarding;

If the delegation message does not include a Delegation header field, the delegated reception processing unit 74 adds a Delegation header field to the delegation message and sets the value of the Delegation header field.

Thirdly, the delegated reception processing unit 74 is adapted to determine whether the delegationd message includes a Delegatee header field before the delegated reception forwarding unit 73 forwards the delegation message obtained by the delegated reception receiving unit 72.

If the delegation message includes a Delegatee header field, the delegated reception processing unit 74 determines that the Delegatee header field does not include an identifier of the delegator and adds the delegator identifier to the Delegatee header field.

If the delegation message does not include a Delegatee header field, the delegated reception processing unit 74 adds a Delegatee header field to the delegation message and sets the delegator identifier in the Delegatee header field.

The SIP processor in this embodiment may act as a delegator processor executing the sixth method embodiment.

To help better understand embodiments of the present invention, the following describes applications of the second and third method embodiments and the fourth and fifth method embodiments in specific processes of transmission and reception of a SIP message in actual scenarios.

Example 1: Direct delegated transmission/reception of a message in the INVITE method (corresponding to the second and third method embodiments).

Scenario: Alice needs to talk with David on behalf of Bob. The delegatee is Alice, the delegator is Bob, and the receiver is David. The service processor of the domain where Bob belongs to provides the delegation service and sets the right allowing Alice to talk to David on behalf of Bob. Before Alice talks with David, Alice sets that the conversation is initiated on behalf of Bob.

As shown in Figure 14, the message flow in this scenario includes:

Step 1: Alice chooses the delegator Bob and sends an authentication request to Bob. In this scenario, the authentication request is carried in a MESSAGE. The process of constructing the authentication request message is as follows:

(1) An original delegation message is constructed:

```
 INVITE sip:david@biloxi.com SIP/2.0
 Via: SIP/2.0/UDP pc33.atlanta.com; branch=z9hG4bKnashds8
 Max-Forwards: 70
 To: david <sip:david@biloxi.com>
 From: Alice <sip:alice@atlanta.com>; tag=1928301774
  Delegator: bob <bob@biloxi.com>
 Call-ID: a84b4c76e66710
 CSeq: 314159 INVITE
 Contact: <sip:alice@pc33.atlanta.com>
 Content-Type: application/sdp
 Content-Length: 142
  (Alice's SDP not shown)
```

Except the Delegator header field, other parts of the original delegation message take on the structure of a normal INVITE message. The first line of the program includes three parts: "INVITE" is the method name of the message, "sip:david@biloxi.com" is the Request-URI, and SIP/2.0 is the protocol version. Below the first line, there are multiple header fields.

The Via header field specifies the transfer path of the message. For every hop the message passes, a Via header field is added to indicate the address of the hop. The branch parameter is an identifier of the current transaction.

The Max-Forwards header field limits the number of hops of message transfer It includes an integer which decreases after every hop.

The To header field specifies the destination of message transfer. It includes a presented name "Bob" and an address.

The From header field specifies the initiator of the message. It also includes a presented name "Alice" and an address. This header field also includes a tag parameter for discrimination.

The Call-ID header field includes a globally unique identifier to identify the call.

The Cseq header field includes an integer and a method name. The integer increases with every new request in the current session to ensure the values of the integer are sequential.

The Contact header field specifies the address where future requests of the peer will be delivered.

The Content-Type header field describes the type of the message body. In this example, the message content described in the Session Description Protocol, SDP, but the message content is not shown (Alice's SDP not shown).

The Content-Length header field specifies the number of bytes included in the message body.

For the message content in the examples hereinafter, refer to the above description.

The Request-URI in the original delegation message is the SIP address of the final message receiver David. The value of the To header field is the SIP address of the final message receiver David. The value of the From header field is the SIP address of the delegatee Alice. The value of the Delegator header field is the SIP address of the delegator Bob. This value is set by Alice before Alice initiates the call.

(2) An authentication request message is constructed:

```
 MESSAGE sip:bob@biloxi.com SIP/2.0
 From: Alice <sip:alice@atlanta.com>
 To: bob@biloxi.com
 CSeq: 20070101 DELEGATE
 Content-Type: message/sipfrag
 Require: delegation
 INVITE sip:david@biloxi.com SIP/2.0
 From: Alice <sip:alice@atlanta.com>
 To: David <sip:david@biloxi.net>
 Date: Thu, 21 Feb 2002 13:02:03 GMT
```

The method name of the above authentication request message is "MESSAGE". The value of the Require header field is set to delegation to indicate that the delegator should support the delegation mechanism. The Content-Type header field is set to application/sipfrag. Fragments of the previously constructed original delegation message, including the first line and authentication related header fields, are placed in the MESSAGE body. In this example, the From and To header fields are selected.

(3) A user processor of Alice sends the above MESSAGE to Bob.

Step 2: A service processor of Bob supports the delegation mechanism and according to a rule set by Bob, the service processor of Bob agrees to the request of Alice and returns authentication information to Alice by placing the authentication information in a success response (200 OK) message in response to the above MESSAGE. The content of the success response message returned by Bob is as follows:

```
 SIP/2.0 200 OK
 From: Alice <sip:alice@atlanta.com>
 To: Bob <bob@biloxi.com>
 CSeq: 20070101 DELEGATE
 Content-Type: multipart/signed;
          protocol="application/pkcs7-signature";
          micalg=sha1; boundary=boundary42
          Content-Length: {the content lenth}
         --boundary42
         Content-Type: message/sipfrag
         Content-Disposition: aib; handling=optional
 INVITE sip:david@biloxi.com SIP/2.0
 From: Alice <sip:alice@atlanta.com>
 To: David <sip:david@biloxi.net>
 Date: Thu, 21 Feb 2002 13:02:03 GMT
         --boundary42
        Content-Type: application/pkcs7-signature; name=smime.p7s
        Content-Transfer-Encoding: base64
        Content-Disposition: attachment; filename=smime.p7s;
            handling=required
         {signature data S}
        --boundary42--
```

The Content-Type header field of the above success response message is multipart/signed. The message body includes authentication information for fragments of the original delegation message. The authentication information includes the part from Content-Type to the last line "boundary42".

Step 3: The user processor of Alice obtains the authentication information from the success response message and constructs a delegation message, with the following content:

```
 INVITE sip:david@biloxi.com SIP/2.0
 Via: SIP/2.0/UDP pc33.atlanta.com;branch=z9hG4bKnashds8
 Max-Forwards: 70
 To: david <sip:david@biloxi.com>
 From: Alice <sip:alice@atlanta.com>;tag=1928301774
 Delegator: bob <bob@biloxi.com>
 Require: delegation
 Call-ID: a84b4c76e66710
 CSeq: 314159 INVITE
 Contact: <sip:alice@pc33.atlanta.com>
 Content-Type: multipart/mixed; boundary=unique-boundary-1
 Content-Length: {the content length}
 --unique-boundary-1
 Content-Type: application/sdp
 Content-Length: {the content length}
  (Alice's SDP not shown)
 --unique-boundary-1--
 Content-Type: multipart/signed;
      protocol="application/pkcs7-signature";
               micalg=sha1; boundary=dragons39
 Content-ID: <20398823.2UWQFN309shb3@referrer.example>
 Content-Length: {the content length}
  --dragons39
  Content-Type: message/sipfrag
  Content-Disposition: aib; handling=optional
 From: Alice <sip:alice@atlanta.com>
 To: David <sip:david@biloxi.net>
 Contact: <sip:alice@pc33. atlanta.com>
 Date: Thu, 21 Feb 2002 13:02:03 GMT
 Call-ID: a84b4c76e66710
 CSeq: 314159 INVITE
 --dragons39
 Content-Type: application/pkcs7-signature; name=smime.p7s
 Content-Transfer-Encoding: base64
 Content-Disposition: attachment; filename=smime.p7s;
                handling=required
            {signature data S}
 --dragons39--
 --unique-boundary-1--
```

When constructing the delegation message, the user processor of Alice sets the Content-Type of the previously constructed original delegation message to the MIME type multipart/mixed. The message body includes two MIME types: the first is the Content-Type in the original delegation message, the content of which is the message body of the original delegation message; the second is multipart/signed, the content of which is the message body of the success response message, that is, the authentication information part.

Step 4: The user processor of Alice sends the finally generated INVITE request to David.

Step 5: The user processor of David receives the INVITE request and authenticates the message according to the delegator identifier and the authentication information of the delegator included in the message to verify the authentication information.

Step 6: The user processor of David rings and returns a temporary response message (which is not shown in Figure 14). The screen of the user processor of David displays the caller Alice and the delegator Bob. David knows Bob and answers the call when David sees that the call is initiated by Alice on behalf of Bob. The user processor of David returns a final success response (200 OK) message.

Step 7: The user processor of Alice sends an ACK message and starts the conversation.

Example 2: Direct delegated transmission/reception of a message in the MESSAGE method (corresponding to the second and third method embodiments).

Scenario: Alice sends a message to David on behalf of Bob. The delegatee is Alice, the delegator is Bob, and the receiver is David. The service processor of the domain where Bob belongs to provides the delegation service and sets the right allowing Alice to send a message to David on behalf of Bob.

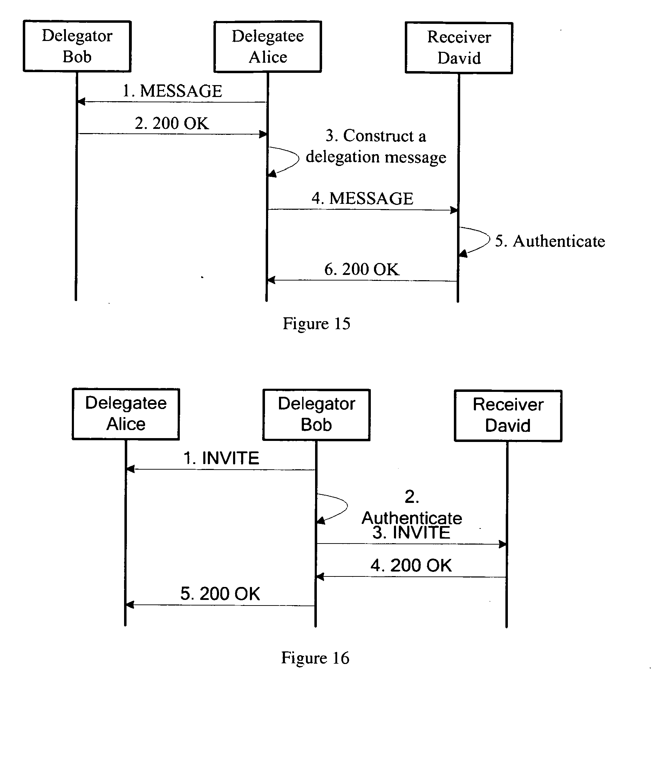

As shown in Figure 15, the message flow in this scenario includes:

Step 1: Alice chooses the delegator Bob and sends an authentication request to Bob. In this scenario, the authentication request is carried in a MESSAGE. The process of constructing the authentication request message is as follows:

(1) An original delegation message is constructed:

```
 MESSAGE sip:david@biloxi.com SIP/2.0
 Via: SIP/2.0/UDP pc33.atlanta.com;branch=z9hG4bKnashds8
 Max-Forwards: 70
 To: david <sip:david@biloxi.com>
 From: Alice <sip:alice@atlanta.com>;tag=1928301774
  Delegator: bob <bob@biloxi.com>
 Call-ID: a84b4c76e66710
 Date: Thu, 21 Feb 2002 13:02:03 GMT
 CSeq: 314159 MESSAGE
 Contact: <sip:alice@pc33.atlanta.com>
 Content-Type: application/sdp
 Content-Length: 142
  (Alice's SDP not shown)
```

The Request-URI in the original delegation message is the SIP address of the final message receiver David. The value of the To header field is the SIP address of the final message receiver David. The value of the From header field is the SIP address of the delegatee Alice. The value of the From header field is the SIP address of the delegator Bob.

(2) An authentication request message is constructed:

```
 MESSAGE sip:bob@biloxi.com SIP/2.0
 From: Alice<sip:alice@atlanta.com>
 To: bob@biloxi.com
 CSeq: 20070101 DELEGATE
 Content-Type: message/sip
 Require: delegation
 MESSAGE sip:david@biloxi.com SIP/2.0
 Via: SIP/2.0/UDP pc33.atlanta.com;branch=z9hG4bKnashds8
 Max-Forwards: 70
 To: david <sip:david@biloxi.com>
 From: Alice <sip:alice@atlanta.com>;tag=1928301774
  Delegator: bob <bob@biloxi.com>
 Call-ID: a84b4c76e66710
 Date: Thu, 21 Feb 2002 13:02:03 GMT
 CSeq: 314159 MESSAGE
 Content-Type: application/sdp
 Content-Length: 142
  (Alice's SDP not shown)
```

The Content-Type header field of the authentication request message is set to message/sip. The previously constructed original delegation message is placed in the body of the MESSAGE.

(3) The user processor of Alice sends the above MESSAGE to the Bob.

Step 2: The service processor of Bob returns authentication information to Alice by placing the authentication information in a success response "200 OK" message in response to the above MESSAGE. The content of the success response message returned by Bob is as follows:

```
 SIP/2.0 200 OK
 From: Alice<sip:alice@atlanta.com>
 To: Bob <bob@biloxi.com>
 CSeq: 20070101 DELEGATE
 Content-Type: multipart/signed;
           protocol="application/pkcs7-signature";
           micalg=sha1; boundary=boundary42
        Content-Length: { the content length }
        --boundary42
        Content-Type: message/sipfrag
        Content-Disposition: aib; handling=optional
 To: david <sip:david@biloxi.com>
 From: Alice <sip:alice@atlanta.com>;tag=1928301774
  Delegator: bob <bob@biloxi.com>
 Call-ID: a84b4c76e66710
 Date: Thu, 21 Feb 2002 13:02:03 GMT
 CSeq: 314159 MESSAGE
        --boundary42
        Content-Type: application/pkcs7-signature; name=smime.p7s
        Content-Transfer-Encoding: base64
        Content-Disposition: attachment; filename=smime.p7s;
            handling=required
        {signature data}
        --boundary42--
```

The Content-Type header field of the above success response message is multipart/signed. The message body includes authentication information for fragments of the original delegation message. The authentication information includes the part from Content-Type to the last line "boundary42".

Step 3: The user processor of Alice obtains the authentication information from the success response message and constructs a delegation message, with the following content:

```
 MESSAGE sip:david@biloxi.com SIP/2.0
 Via: SIP/2.0/UDP pc33.atlanta.com;branch=z9hG4bKnashds8
 Max-Forwards: 70
 To: david <sip:david@biloxi.com>
 From: Alice <sip:alice@atlanta.com>;tag= 1928301774
  Delegator: bob <bob@biloxi.com>
 Call-ID: a84b4c76e66710
 Date: Thu, 21 Feb 2002 13:02:03 GMT
 CSeq: 314159 MESSAGE
 Content-Type: multipart/mixed; boundary=unique-boundary-1
 Content-Length: { the content length }
 --unique-boundary-1
 Content-Type: multipart/signed;
      protocol="application/pkcs7-signature";
              micalg=sha1; boundary=dragons39
 Content-ID: <20398823.2UWQFN309shb3@referrer.example>
 Content-Length: { the content length}
 --dragons39
 Content-Type: message/sipfrag
 Content-Disposition: aib; handling=optional
 Date: Thu, 21 Feb 2002 13:02:03 GMT
 To: david <sip:david@biloxi.com>
 From: Alice <sip:alice@atlanta.com>;tag=1928301774
  Delegator: bob <bob@biloxi.com>
 Call-ID: a84b4c76e66710
 Date: Thu, 21 Feb 2002 13:02:03 GMT
 CSeq: 314159 MESSAGE
 --dragons39
 Content-Type: application/pkcs7-signature; name=smime.p7s
 Content-Transfer-Encoding: base64
 Content-Disposition: attachment; filename=smime.p7s;
               handling=required
            {signature data}
 --dragons39--
 --unique-boundary-1--
 Content-Type: application/sdp
 Content-Length: {the content length}
 "Alice's SDP not shown"
 --unique-boundary-1--
```

When constructing the delegation message, the user processor of Alice sets the Content-Type of the previously constructed original delegation message to the MIME type multipart/mixed. The message body includes two MIME types: the first is the Content-Type in the original delegation message, the content of which is the message body of the original delegation message; the second is multipart/signed, the content of which is the message body of the success response message, that is, the authentication information part.

Step 4: The user processor of Alice sends the finally generated MESSAGE to David.

Step 5: The user processor of David receives the MESSAGE and authenticates the message according to the identifier and the authentication information of the delegator included in the message to verify the authentication information.

Step 6: The user processor of David returns a success response "200 OK" message.

Example 3: Indirect delegated transmission/reception of a message in the INVITE method (corresponding to the fourth and fifth method embodiments).

Scenario: Alice wants to talk with David on behalf of Bob. The delegatee is Alice, the delegator is Bob, and the receiver is David. The service processor of the domain where Bob belongs to provides the delegation service and sets the right allowing Alice to talk to David on behalf of Bob. Before Alice talks with David, Alice sets that the conversation is initiated on behalf of Bob.

As shown in Figure 16, the message flow in this scenario includes:

Step 1: Alice chooses the delegator Bob and sends a delegation message to Bob. The message content is as follows:

```
 INVITE sip:bob@biloxi.com SIP/2.0
 Via: SIP/2.0/UDP pc33.atlanta.com;branch=z9hG4bKnashds8
 Max-Forwards: 70
 To: David <sip:david@biloxi.com>
 From: Alice <sip:alice@atlanta.com>;tag=1928301774
 Require: delegation
 Call-ID: a84b4c76e66710
 CSeq: 314159 INVITE
 Contact: <sip:alice@pc33.atlanta.com>
 Content-Type: application/sdp
 Content-Length: 142
  (Alice's SDP not shown)
```

The Request-URI in the delegation message is the SIP address of the delegator Bob. The value of the To header field is the SIP address of the final message receiver David. The value of the From header field is the SIP address of the delegatee Alice. The Require header field includes a delegation tag.

Step 2: The service processor of Bob receives the INVITE request and finds that the Require header field carries a delegation tag which indicates that the service processor should support the delegation mechanism. The service processor of Bob authenticates the request from Alice according to the setting of Bob. After the authentication is successful, the service processor of Bob adds its signature information to the above message. The service processor of Bob also modifies the value of Request-URI to the SIP address of David. The content of the INVITE request after processing is as follows:

```
 INVITE sip:david@biloxi.com SIP/2.0
 Via: SIP/2.0/UDP pc33.atlanta.com;branch=z9hG4bKnashds8;
 Via: SIP/2.0/UDP pc31.biloxi.com;branch= z9hG4bKnashxxt;
 Max-Forwards: 69
 To: David <sip:david@biloxi.com>
 From: Alice <sip: alice @ atlanta.com>;tag=1928301774
 Call-ID: a84b4c76e66710
 Date: Thu, 21 Feb 2002 13:02:03 GMT
  Delegator: Bob<bob@biloxi.com>;
                cid="20398823.2UWQFN309shb3@bilox.example"
 Require: delegation
 CSeq: 314159 INVITE
 Contact: <sip:alice@pc33.atlanta.com>
 Content-Type: multipart/mixed;boundary=unique-boundary-1
 Content-Length: 142
 --unique-boundary-1
 Content-Type: multipart/signed;
 protocol="application/pkcs7-signature";
               micalg=sha1; boundary=dragons39
 Content-ID: <20398823.2UWQFN309shb3@referrer.example>
 Content-Length: { the content length }
  --dragons39
  Content-Type: message/sipfrag
 Content-Disposition: aib; handling=optional
 To: David <sip:david@biloxi.com>
 From: Alice <sip:alice@atlanta.com>;tag=1928301774
 Call-ID: a84b4c76e66710
 Date: Thu, 21 Feb 2002 13:02:03 GMT
  Delegator: bob@biloxi.com;
                cid="20398823.2UWQFN309shb3@bilox.example"
  --dragons39
  Content-Type: application/pkcs7-signature; name=smime.p7s
  Content-Transfer-Encoding: base64
  Content-Disposition: attachment; filename=smime.p7s;
                handling=required
 (signature information of the service processor of Bob)
 --dragons39--
 --unique-boundary-1
 Content-Type: application/sdp
 Content-Length: { the content length}
  (Alice's SDP not shown)
 --unique-boundary-1
```

Step 3: The service processor of Bob forwards the modified INVITE request to David.

Step 4: The user processor of David receives the INVITE request and verifies the signature information of the service processor of Bob. The user processor of David determines that the signature is valid and processes the INVITE request, and returns a success response (200 OK) message according to the Via header field in the INVITE request. The content of the success response message is as follows:

```
 SIP/2.0 200 OK
 To: David <sip:david@biloxi.com>; tang=1774192830
 From: Alice <sip:alice@atlanta.com>;tag=1928301774
 Call-ID: a84b4c76e66710
 Date: Thu, 21 Feb 2002 13:02:03 GMT
 Content-Type: application/sdp
 Content-Length: {the content length}
 (David's SDP not shown)
```

Step 5: The service processor of Bob forwards the success response message of David to Alice.

In the foregoing embodiments, delegation-related header fields or header field parameters in a SIP message are extended so that a SIP processor carries out processing in accordance with the extended header fields or header field parameters to realize delegation at the SIP layer. Because delegation is implemented at the SIP layer, the delegation mechanism is independent of services and therefore can be applied to different services. This facilitates multiplexing and uniform management of the delegation function.

Although the invention has been described through exemplary embodiments, the invention is not limited to such embodiments. It is apparent that those skilled in the art can make various modifications and variations to the invention without departing from the scope of the present invention. The invention is intended to cover the modifications and variations provided that they fall in the scope of protection defined by the claims or their equivalents.

## Claims

1. A method for delegated transmission of a Session Initiation Protocol, SIP, message, wherein the delegated transmission means that a delegatee is allowed to transmit or receive messages for a delegator, comprising:
obtaining, by a delegatee processor, choice information of a delegator;
generating, by the delegatee processor, a delegation message which comprises a delegation attribute header field that carries information of the delegator; and
sending, by the delegatee processor, the delegation message to a receiver;
wherein before generating, by the delegatee processor, the delegation message, the method further comprises: sending, by the delegatee processor, an authentication request message to a delegator;
returning, by a delegator processor, authentication information in response to the authentication request message, wherein the delegation message includes the authentication information, which indicates that the delegator allows the delegatee to send the delegation message; and
receiving, by the delegatee processor, the authentication information; and wherein the step of generating a delegation message further comprises: placing the authentication information in the delegation message.

2. The method according to claim 1, wherein the step of sending, by the delegatee, the authentication request message to the delegator comprises:
generating, by the delegatee processor, an original delegation message;
generating, by the delegatee processor, the authentication request message, wherein message body of the authentication request message comprises the original delegation message or fragments of the original delegation message,;
sending, by the delegatee processor, the authentication request message to the delegator; and
generating, by the delegatee processor, the delegation message by adding the authentication information to the message body of the original delegation message.

3. The method according to any one of claims 1-2, wherein the delegator processor sets a delegation tag in a Require header field of the authentication request message when generating the authentication request message, and
the delegator processor determines that itself supports a delegation mechanism according to the delegation tag in the Require header field before obtaining the original delegation message or fragments of the original delegation message from the authentication request message.

4. The method according to any one of claims 1-3, wherein the delegatee processor sets a delegation tag in a Require header field of the delegation message when generating the delegation message, wherein the delegation tag in the Require header field indicates that a network element processing the delegation message should support a delegation mechanism.

5. A Session Initiation Protocol, SIP, processor, comprising:
a choice obtaining unit (21), adapted to obtain choice information of a delegator;
a message generating unit (22), adapted to generate a delegation message, which comprises a delegation attribute header field that carries information of the delegator;
a delegated transmitting unit (23), adapted to send the delegation message to a receiver; and
an authentication obtaining unit (24), adapted to send an authentication request message to the delegator and receive authentication information returned by a delegator processor in response to the authentication request message, wherein:
the delegated transmission means that the delegatee is allowed to transmit or receive messages for delegator; and
the delegation message generated by the message generating unit (24), further comprises the authentication information, which indicates that the delegator allows the delegatee to send the delegation message.

6. The SIP processor according to claim 5, wherein the authentication obtaining unit (24) comprises:
an original message unit (241), adapted to generate an original delegation message;
an authentication requesting unit (242), adapted to generate an authentication request message and send the authentication request message to the delegator processor, wherein the message body of the authentication request message comprises the original delegation message or fragments of the original delegation message;
an authentication receiving unit (243), adapted to obtain authentication information from a success response message returned by the delegator in response to the authentication request message;
wherein the message generating unit (22) generates the delegation message by adding the authentication information to the message body of the original delegation message.

7. The SIP processor according to claim 6, further comprising:
a delegation authenticating unit (25), adapted to return authentication information in response to the authentication request message sent by a delegatee, wherein the delegation authenticating unit (25) further comprises:
an authentication processing unit (251), adapted to obtain the original delegation message or fragments of the original delegation message carried in the authentication request message sent by the delegatee and generate authentication information according to its own delegation policy; and
an authentication responding unit (252), adapted to generate a success response message in response to the authentication request message and send the success response message to the delegatee, wherein the message body of the success response message comprises the authentication information.

8. The SIP processor according to claim 7, wherein the authentication request message obtained by the delegation authenticating unit (25) comprises a Require header field with a delegation tag; and
the SIP processor further comprises: a support determining unit (26), adapted to determine that the SIP processor supports a delegation mechanism according to the delegation tag in the Require header field before the delegation authenticating unit processes the authentication request message.

9. A computer program product, comprising computer program code, which, when executed by a computer unit, causes the computer unit to perform the processes of claims 1-4.

## Patentansprüche

1. Verfahren für die beauftragte Übertragung einer Sitzungsinitüerungsprotokoll-Nachricht, SIP-Nachricht, wobei die beauftragte Übertragung bedeutet, dass ein Beauftragter Nachrichten für einen Beauftragenden senden oder empfangen darf, das Folgendes umfasst:
Erhalten von Wahlinformationen eines Beauftragenden durch einen Beauftragten-Prozessor;
Erzeugen durch den Beauftragten-Prozessor einer Beauftragungsnachricht, die ein Beauftragungsattribut-Kopffeld enthält, das Informationen des Beauftragenden transportiert; und
Senden durch den Beauftragten-Prozessor der Beauftragungsnachricht zu einem Empfänger;
wobei vor dem Erzeugen der Beauftragungsnachricht durch den Beauftragten-Prozessor das Verfahren ferner Folgendes umfasst: Senden einer Authentifizierungsanforderungsnachricht durch den Beauftragten-Prozessor zu einem Beauftragenden;
Zurückleiten von Authentifizierungsinformationen durch einen Beauftragenden-Prozessor als Reaktion auf die Authentifizierungsanforderungsnachricht, wobei die Beauftragungsnachricht die Authentifizierungsinformationen enthält, die angeben,
dass der Beauftragende dem Beauftragten erlaubt, die Beauftragungsnachricht zu senden; und
Empfangen der Authentifizierungsinformationen durch den Beauftragten-Prozessor;
und wobei der Schritt des Erzeugens einer Beauftragungsnachricht ferner Folgendes umfasst: Anordnen der Authentifizierungsinformationen in der Beauftragungsnachricht.

2. Verfahren nach Anspruch 1, wobei der Schritt des Sendens der Authentifizierungsanforderungsnachricht durch den Beauftragten an den Beauftragenden Folgendes umfasst:
Erzeugen einer ursprünglichen Beauftragungsnachricht durch den Beauftragten-Prozessor;
Erzeugen der Authentifizierungsanforderungsnachricht durch den Beauftragten-Prozessor, wobei der Nachrichtenkörper der Authentifizierungsanforderungsnachricht die ursprüngliche Beauftragungsnachricht oder Fragmente der ursprünglichen Beauftragungsnachricht enthält;
Senden der Authentifizierungsanforderungsnachricht durch den Beauftragten-Prozessor zu dem Beauftragenden; und
Erzeugen der Beauftragungsnachricht durch den Beauftragten-Prozessor durch Hinzufügen der Authentifizierungsinformationen zu dem Nachrichtenkörper der ursprünglichen Beauftragungsnachricht.

3. Verfahren nach einem der Ansprüche 1-2, wobei der Beauftragenden-Prozessor ein Beauftragungsetikett in einem Bedarfskopffeld der Authentifizierungsanforderungsnachricht setzt, wenn die Authentifizierungsanforderungsnachricht erzeugt wird, und
der Beauftragenden-Prozessor bestimmt, dass er selbst einen Beauftragungsmechanismus in Übereinstimmung mit dem Beauftragungsetikett in dem Bedarfskopffeld unterstützt, bevor die ursprüngliche Beauftragungsnachricht oder Fragmente der ursprünglichen Beauftragungsnachricht von der Authentifizierungsanforderungsnachricht erhalten werden.

4. Verfahren nach einem der Ansprüche 1-3, wobei der Beauftragten-Prozessor ein Beauftragungsetikett in einem Bedarfskopffeld der Beauftragungsnachricht setzt, wenn die Beauftragungsnachricht erzeugt wird, wobei das Beauftragungsetikett in dem Bedarfskopffeld angibt, dass ein die Beauftragungsnachricht verarbeitendes Netzelement einen Beauftragungsmechanismus unterstützen sollte.

5. Sitzungsinitiierungsprotokoll-Prozessor, SIP-Prozessor, der Folgendes umfasst:
eine Wahlerhaltungseinheit (21), die dazu ausgelegt ist, Wahlinformationen eines Beauftragenden zu erhalten;
eine Nachrichtenerzeugungseinheit (22), die dazu ausgelegt ist, eine Beauftragungsnachricht zu erzeugen, die ein Beauftragungsattribut-Kopffeld enthält, das Informationen des Beauftragenden transportiert;
eine Einheit (23) für beauftragte Übertragung, die dazu ausgelegt ist, die Beauftragungsnachricht an einen Empfänger zu senden; und
eine Authentifizierungserhaltungseinheit (24), die dazu ausgelegt ist, eine Authentifizierungsanforderungsnachricht zu dem Beauftragenden zu senden und Authentifizierungsinformationen, die von einem Beauftragenden-Prozessor als Reaktion auf die Authentifizierungsanforderungsnachricht zurückgeleitet werden, zu empfangen, wobei:
die beauftragte Übertragung bedeutet, dass der Beauftragte Nachrichten für Beauftragende senden oder empfangen kann; und
die Beauftragungsnachricht, die durch die Nachrichtenerzeugungseinheit (24) erzeugt wird, ferner die Authentifizierungsinformationen enthält, die angeben, dass der Beauftragende dem Beauftragten erlaubt, die Beauftragungsnachricht zu senden.

6. SIP-Prozessor nach Anspruch 5, wobei die Authentifizierungserhaltungseinheit (24) Folgendes umfasst:
eine Einheit (241) für ursprüngliche Nachricht, die dazu ausgelegt ist, eine ursprüngliche Beauftragungsnachricht zu erzeugen;
eine Authentifizierungsanforderungseinheit (242), die dazu ausgelegt ist, eine Authentifizierungsanforderungsnachricht zu erzeugen und die Authentifizierungsanforderungsnachricht zu dem Beauftragten-Prozessor zu senden,
wobei der Nachrichtenkörper der Authentifizierungsanforderungsnachricht die ursprüngliche Beauftragungsnachricht oder Fragmente der ursprünglichen Beauftragungsnachricht enthält;
eine Authentifizierungsempfangseinheit (243), die dazu ausgelegt ist Authentifizierungsinformationen von einer Nachricht für erfolgreiche Antwort, die von dem Beauftragenden als Reaktion auf die Authentifizierungsanforderungsnachricht zurückgeleitet wird, zu erhalten;
wobei die Nachrichtenerzeugungseinheit (22) die Beauftragungsnachricht durch Hinzufügen der Authentifizierungsinformationen zu dem Nachrichtenkörper der ursprünglichen Beauftragungsnachricht erzeugt.

7. SIP-Prozessor nach Anspruch 6, der ferner Folgendes umfasst:
eine Beauftragungsauthentifizierungseinheit (25), die dazu ausgelegt ist, Authentifizierungsinformationen als Reaktion auf die von einem Beauftragten gesendete Authentifizierungsanforderungsnachricht zurückzuleiten, wobei die Beauftragungsauthentifizierungseinheit (25) ferner Folgendes umfasst:
eine Authentifizierungsverarbeitungseinheit (251), die dazu ausgelegt ist, die ursprüngliche Beauftragungsnachricht oder Fragmente der ursprünglichen Beauftragungsnachricht, die in der von dem Beauftragten gesendeten Authentifizierungsanforderungsnachricht transportiert wird, zu erhalten und Authentifizierungsinformationen in Übereinstimmung mit ihrer eigenen Beauftragungsstrategie zu erzeugen; und
eine Authentifizierungsantworteinheit (252), die dazu ausgelegt ist, eine Nachricht für erfolgreiche Antwort als Reaktion auf die Authentifizierungsanforderungsnachricht zu erzeugen und die Nachricht für erfolgreiche Antwort zu dem Beauftragten zu senden, wobei der Nachrichtenkörper der Nachricht für erfolgreiche Antwort die Authentifizierungsinformationen enthält.

8. SIP-Prozessor nach Anspruch 7, wobei die von der Beauftragungsauthentifizierungseinheit (25) erhaltene Authentifizierungsanforderungsnachricht ein Bedarfskopffeld mit einem Beauftragungsetikett enthält; und
der SIP-Prozessor ferner Folgendes umfasst: eine Unterstützungsbestimmungseinheit (26), die dazu ausgelegt ist, in Übereinstimmung mit dem Beauftragungsetikett in dem Bedarfskopffeld zu bestimmen, dass der SIP-Prozessor einen Beauftragungsmechanismus unterstützt, bevor die Beauftragungsauthentifizierungseinheit die Authentifizierungsanforderungsnachricht verarbeitet.

9. Computerprogrammprodukt, das Computerprogramm-Code enthält, der, wenn er von einer Computereinheit ausgeführt wird, die Computereinheit dazu veranlasst, die Prozesse nach den Ansprüchen 1-4 auszuführen.

## Revendications

1. Procédé de transmission déléguée d'un message de Protocole d'Ouverture de Session, SIP (Session Initiation Protocol), dans lequel la transmission déléguée signifie qu'un délégataire est autorisé à transmettre ou recevoir des messages pour un délégant, comprenant :
l'obtention, par un processeur délégataire, d'informations de choix d'un délégant;
la production, par le processeur délégataire, d'un message de délégation qui comprend un champ d'en-tête d'attribut de délégation acheminant des informations du délégant ; et
l'envoi, par le processeur délégataire, du message de délégation à un récepteur ;
dans lequel avant la production, par le processeur délégataire, du message de délégation, le procédé comprend en outre : l'envoi, par le processeur délégataire, d'un message de demande d'authentification à un délégant ;
le renvoi, par un processeur délégant, d'informations d'authentification en réponse au message de demande d'authentification, dans lequel le message de délégation comprend les informations d'authentification indiquant que le délégant permet au délégataire d'envoyer le message de délégation ; et
la réception, par le processeur délégataire, des informations d'authentification ; et dans lequel l'étape de production d'un message de délégation comprend en outre : l'introduction des informations d'authentification dans le message de délégation.

2. Procédé selon la revendication 1, dans lequel l'étape d'envoi, par le délégataire, du message de demande d'authentification au délégant comprend :
la production, par le processeur délégataire, d'un message de délégation d'origine ;
la production, par le processeur délégataire, du message de demande d'authentification, dans lequel le corps de message du message de demande d'authentification comprend le message de délégation d'origine ou des fragments du message de délégation d'origine ;
l'envoi, par le processeur délégataire, du message de demande d'authentification au délégant ; et
la production, par le processeur délégataire, du message de délégation en ajoutant les informations d'authentification au corps de message du message de délégation d'origine.

3. Procédé selon l'une quelconque des revendications 1-2, dans lequel le processeur délégant définit une balise de délégation dans un champ d'en-tête "Require" (exigence) du message de demande d'authentification lors de la production du message de demande d'authentification, et
le processeur délégant détermine qu'il prend lui-même en charge un mécanisme de délégation conformément à la balise de délégation dans le champ d'en-tête "Require" avant d'obtenir le message de délégation d'origine ou des fragments du message de délégation d'origine à partir du message de demande d'authentification.

4. Procédé selon l'une quelconque des revendications 1-3, dans lequel le processeur délégataire définit une balise de délégation dans un champ d'en-tête "Require" du message de délégation lors de la production du message de délégation, dans lequel la balise de délégation dans le champ d'en-tête "Require" indique qu'un élément de réseau traitant le message de délégation doit prendre en charge un mécanisme de délégation.

5. Processeur de Protocole d'Ouverture de Session, SIP, comprenant :
une unité d'obtention de choix (21), apte à obtenir des informations de choix d'un délégant ;
une unité de production de message (22), apte à produire un message de délégation, qui comprend un champ d'en-tête d'attribut de délégation acheminant des informations du délégant ;
une unité de transmission déléguée (23), apte à envoyer le message de délégation à un récepteur ; et
une unité d'obtention d'authentification (24), apte à envoyer un message de demande d'authentification au délégant et à recevoir des informations d'authentification renvoyées par un processeur délégant en réponse au message de demande d'authentification, dans lequel :
la transmission déléguée signifie que le délégataire est autorisé à transmettre ou recevoir des messages pour le délégant ; et
le message de délégation produit par l'unité de production de message (24), comprend en outre les informations d'authentification indiquant que le délégant permet au délégataire d'envoyer le message de délégation.

6. Processeur SIP selon la revendication 5, dans lequel l'unité d'obtention d'authentification (24) comprend :
une unité de message d'origine (241), apte à produire un message de délégation d'origine ;
une unité de demande d'authentification (242), apte à générer un message de demande d'authentification et à envoyer le message de demande d'authentification au processeur délégant, dans lequel le corps de message du message de demande d'authentification comprend le message de délégation d'origine ou des fragments du message de délégation d'origine ;
une unité de réception d'authentification (243), apte à obtenir des informations d'authentification à partir d'un message de réponse de réussite renvoyé par le délégant en réponse au message de demande d'authentification ;
dans lequel l'unité de production de message (22) produit le message de délégation en ajoutant les informations d'authentification au corps de message du message de délégation d'origine.

7. Processeur SIP selon la revendication 6, comprenant en outre :
une unité d'authentification de délégation (25), apte à renvoyer des informations d'authentification en réponse au message de demande d'authentification envoyé par un délégataire, dans lequel l'unité d'authentification de délégation (25) comprend en outre :
une unité de traitement d'authentification (251), apte à obtenir le message de délégation d'origine ou des fragments du message de délégation d'origine acheminés dans le message de demande d'authentification envoyé par le délégataire et à produire des informations d'authentification selon sa propre politique de délégation ; et
une unité de réponse d'authentification (252), apte à produire un message de réponse de réussite en réponse au message de demande d'authentification et à envoyer le message de réponse de réussite au délégataire, dans lequel le corps de message du message de réponse de réussite comprend les informations d'authentification.

8. Processeur SIP selon la revendication 7, dans lequel le message de demande d'authentification obtenu par l'unité d'authentification de délégation (25) comprend un champ d'en-tête "Require" avec une balise de délégation ; et
le processeur SIP comprend en outre : une unité de détermination de prise en charge (26), apte à déterminer que le processeur SIP prend en charge un mécanisme de délégation conformément à la balise de délégation dans le champ d'en-tête "Require" avant que l'unité d'authentification de délégation traite le message de demande d'authentification.

9. Produit de programme informatique, comprenant un code de programme informatique qui, lorsqu'il est exécuté par une unité informatique, fait en sorte que l'unité informatique mette en oeuvre les procédés des revendications 1-4.
